(19) Europäisches Patentamt
European Patent Office
Office européen des brevets

(11) **EP 2 070 458 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(51) Int Cl.:
***A47J 31/54*** *(2006.01)*     ***A47J 31/56*** *(2006.01)*

(21) Anmeldenummer: **08105779.6**

(22) Anmeldetag: **12.11.2008**

(54) **Verfahren zur Ermittlung eines Durchflusses in einer Kaffeemaschine und Kaffeemaschine zur Durchführung des Verfahrens**

Method for detecting a flow in a coffee machine and coffee machine to implement the method

Procédé de détermination d'un débit dans une machine à café et machine à café destinée à l'exécution du procédé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.12.2007 DE 102007059769**

(43) Veröffentlichungstag der Anmeldung:
**17.06.2009 Patentblatt 2009/25**

(73) Patentinhaber: **BSH Bosch und Siemens Hausgeräte GmbH**
**81739 München (DE)**

(72) Erfinder:
• **Aigner, Andreas**
  **83313 Siegsdorf (DE)**
• **Daburger, Josef**
  **83313 Siegsdorf / Hammer (DE)**
• **Hauser, Andreas**
  **83370 Seeon (DE)**

(56) Entgegenhaltungen:
**EP-A- 0 771 542**

**Beschreibung**

Die vorliegende Erfindung betrifft ein Verfahren zur Ermittlung des Durchflusses von Flüssigkeiten in einer Kaffeemaschine, die eine Zuführung und eine Abgabeöffnung für die Flüssigkeit und dazwischen eine Heizung und zwei Temperatursensoren sowie eine mit den beiden Temperatursensoren verbundene Regelungseinrichtung umfasst, mit folgenden Schritten:

- Durchführung einer ersten Temperaturmessung der Flüssigkeit stromauf der Heizung,
- Durchführung einer zweiten Temperaturmessung stromab der Heizung,
- Ermittlung einer Temperaturdifferenz aus den in den Temperaturmessungen ermittelten Temperaturen.

Außerdem betrifft die Erfindung eine Kaffeemaschine zur Durchführung des Verfahrens.

Die Ermittlung des Durchflusses von Flüssigkeiten in Kaffeemaschinen, speziell des Durchflusses von Wasser zur Zubereitung von Kaffee, ist notwendig, um einerseits den Eintrag der Heizleistung in das Wasser zu regeln, und andererseits, um die Wassermenge für unterschiedliche Kaffeegetränke dosieren zu können. In erster Linie jedoch dienen die ermittelten Durchflussangaben dazu, einen Benutzer über die abgegebene Kaffeemenge zu informieren. Dies geschieht beispielsweise in Form von Mengenangaben in Millilitern oder von grafischen Symbolen wie Tassen, die teilweise oder ganz gefüllt sind.

Üblicherweise wird der Durchfluss von Flüssigkeiten in Kaffeemaschinen mit sogenannten Durchflussmessern ermittelt. Sie bestehen meist aus einem Flügelrad, welches im Röhrensystem der Kaffeemaschine angebracht ist, und bei Durchfluss von Flüssigkeiten in Rotation versetzt wird. Anhand der Geschwindigkeit der Rotation in Kombination mit der Zeitspanne, in der das Flügelrad rotiert, und dem Querschnitt der Röhre kann ermittelt werden, wie viel Flüssigkeit durch die Röhre geflossen ist.

Als Zuführung einer Kaffeemaschine können sowohl Flüssigkeitsreservoirs dienen als auch Direktanschlüsse der Kaffeemaschine an ein häusliches Trinkwasserrohrsystem, die beispielsweise mit einem durch ein Ventil gesicherten Verbindungsschlauch direkt an eine Trinkwasserleitung erfolgen.

In der EP 0 771 542 A1 ist eine Kaffeemaschine beschrieben, in der eine Wasserpumpe Wasser von einem Wasserreservoir über eine Heizung in eine Brühkammer leitet. Dabei wird die Pumpleistung in Abhängigkeit der Wassertemperatur, die nach dem Durchlaufen des Wassers durch die Heizung von einem Temperatursensor gemessen wird, geregelt. Optional ist ein weiterer Temperatursensor zur Messung der Wassertemperatur vor der Heizung vorgesehen. Die Pumpleistung kann dann in Abhängigkeit von der Differenz der Wassertemperaturen nach der Heizung und vor der Heizung geregelt werden. Das System sieht weiterhin eine Zählereinrichtung vor, die den Wasserdurchfluss durch das System misst. Eine Kontrollvorrichtung kontrolliert weiterhin neben der Pumpleistung, den Eingangsdaten aus den zwei Temperaturmessungen und aus der Zählereinrichtung den Stromeintrag in die Heizung. Eine solche Kaffeemaschine weist zur Kontrolle der Wassertemperatur und zur Flüssigkeitsdosierung also zahlreiche physikalische und elektronische Komponenten auf, die den ohnehin engen Raum im Gehäuse der Kaffeemaschine beanspruchen.

Aufgabe der vorliegenden Erfindung ist es, eine einfachere Ermittlung des Durchflusses von Flüssigkeiten in einer Kaffeemaschine zu ermöglichen, die mit weniger Komponenten innerhalb einer Kaffeemaschine auskommt.

Diese Aufgabe wird gelöst durch ein eingangs genanntes Verfahren, bei dem die Ermittlung des Durchflusses durchflussmesserfrei durch eine Ermittlung der Heizleistung und eine Berechnung eines Quotienten aus der Heizleistung und der mit einer für die Flüssigkeit spezifischen Materialkonstante multiplizierten Temperaturdifferenz erfolgt. Der so errechnete Quotient repräsentiert, wie im Folgenden gezeigt wird, den Durchfluss der Flüssigkeit. Sein Wert ist also direkt proportional zum Durchfluss. Mit einer durchflussmesserfreien Ausführung der Kaffeemaschine wird speziell auf solche mechanische und/oder elektronische Bauteile verzichtet, die durch die Strömung einer Flüssigkeit angeregt werden und aus dieser Anregung einen Wert oder ein Anzeigesignal ableiten, das den Durchfluss repräsentiert. Die Erfindung erübrigt also ein mechanisches Bauteil. Sie gewinnt die an sich erforderliche Information aus Daten, die ohnehin oder mit geringem Zusatzaufwand erhoben werden.

Die Berechnung erfolgt nach der Formel $\dot{Q} = c \times \dot{m} \times \Delta T$. Dabei ist $\dot{Q}$ die Leistung bzw. der Wärmestrom der Heizung, c eine Materialkonstante der Flüssigkeit und $\Delta T$ die Temperaturdifferenz. $\dot{m}$ ist der zu ermittelnde Massenstrom der Flüssigkeit, welche das System durchfließt. Die Temperaturdifferenz wird gebildet durch Subtraktion der in der ersten Temperaturmessung ermittelten Temperatur von der in der zweiten Temperaturmessung ermittelten Temperatur bzw. durch Subtraktion der in der zweiten Temperaturmessung ermittelten Temperatur von der in der ersten Temperaturmessung ermittelten Temperatur und anschließende Umkehrung des Vorzeichens. Nach $\dot{m}$ aufgelöst ergibt sich der oben ausgeführte Quotient: $\dot{m} = \dfrac{\dot{Q}}{c \times \Delta T}$. Aus $\dot{m}$ lässt

sich in Kenntnis der Dichte ρ der Flüssigkeit der Volumenstrom $\dot{V}$ nach der Formel $\dot{V} = \dfrac{\dot{m}}{\rho}$ errechnen.

Der Durchfluss, also das durch die Heizung geflossene Flüssigkeitsvolumen, ist damit direkt proportional zum Massenstrom $\dot{m}$, der ihn somit repräsentiert.

Die Erfindung basiert also auf dem Prinzip, einen Durchflussmesser in der Kaffeemaschine ersatzlos herauszulassen und die bereits im Stand der Technik vorhandene Hardware (die zwei Temperatursensoren und die Verbindung von einer Regelungseinrichtung wie der oben erwähnten Kontrollvorrichtung hin zu den Temperatursensoren und der Heizung) zusätzlich dazu zu nutzen, den Durchfluss zu ermitteln. Die Berechnung des den Durchfluss repräsentierenden Quotienten kann dabei auch teilweise oder vollständig automatisiert mit Hilfe von Schaltungs- und/oder Softwaremodulen erfolgen.

Die Ermittlung der Heizleistung kann entweder dadurch erfolgen, dass die Heizung mit einer konstanten - und damit bekannten - Heizleistung betrieben wird oder dadurch, dass eine variable Heizleistung im laufenden Betrieb ständig ermittelt wird. Auch dies kann mit Hilfe einer Regelungseinrichtung erfolgen.

Gemäß einer vorteilhaften Ausführungsform des erfindungsgemäßen Verfahrens wird in Abhängigkeit von dem ermittelten Durchfluss eine Flüssigkeitspumpe und/oder ein Durchflussventil geregelt. Die Drosselung bzw. Steigerung der Pumpleistung einer Flüssigkeitspumpe bzw. die Einstellung eines Durchflussventils sind folglich gekoppelt an den ermittelten Durchfluss. Hierdurch entsteht ein Regelkreis, auf dessen Basis die Durchleitung der Flüssigkeit dosiert wird. Es wird damit erreicht, dass ein Nutzer eine definierte Menge an gebrühtem Kaffee in der gewünschten Qualität erhält. Zur Regelung der Flüssigkeitspumpe und/oder des Durchflussventils wird bevorzugterweise eine Regelungseinrichtung verwendet, die mit der Flüssigkeitspumpe und/oder dem Durchflussventil gekoppelt ist, die sie im Betrieb in Abhängigkeit von dem ermittelten Durchfluss regelt.

Außerdem wird die Aufgabe gelöst durch eine Kaffeemaschine mit einer Zuführung, einer Abgabeöffnung für eine Flüssigkeit und dazwischen einer Heizung und zwei Temperatursensoren stromauf und stromab der Heizung sowie einer mit den beiden Temperatursensoren verbundenen Regelungseinrichtung, wobei die Kaffeemaschine durchflussmesserfrei betreibbar ist, indem die Regelungseinrichtung mit einer Leistungs-Ermittlungseinheit zur Bestimmung einer Leistung der Heizung gekoppelt ist und im Betrieb einen den Durchfluss repräsentierenden Quotienten aus der Heizleistung und der mit einer für die Flüssigkeit spezifischen Materialkonstante multiplizierten Temperaturdifferenz bildet. Eine derartige Kaffeemaschine ist dazu geeignet, ein oben beschriebenes erfindungsgemäßes Verfahren zu ermöglichen und basiert daher auf den selben erfinderischen Prinzipien.

Bevorzugt weist die Kaffeemaschine in der Regelungseinrichtung eine Subtraktionseinheit zur Bestimmung der Temperaturdifferenz zwischen einer vom ersten und einer vom zweiten Sensor gemessenen Temperatur auf. Eine solche Subtraktionseinheit kann beispielsweise ein programmgesteuertes Rechner-/Chip-Modul sein, welches aus den Messwerten der Temperaturmessung des ersten und des zweiten Sensors eine Differenz bildet. Die so ermittelte Temperaturdifferenz $\Delta T$ stellt, multipliziert mit der Materialkonstante c, den Nenner des oben erläuterten Quotienten dar.

Das Prinzip der Erfindung wird im Folgenden anhand einer Zeichnung beispielshalber noch näher erläutert. Die einzige Figur zeigt den schematischen Aufbau der Anordnungen im Bereich einer erfindungsgemäßen Kaffeemaschine.

Wasser L wird in Flussrichtung $\overline{F}$ von einem Wasservorrat 2 über eine Flüssigkeitszuführung 3 hin zu einer Flüssigkeitsabgabeöffnung 5 geführt und dabei erwärmt. Es durchläuft dabei folgende Komponenten:

Über eine Flüssigkeitspumpe 19 und ein Durchflussventil 21 gelangt es zu einem ersten Temperatursensor 9 und danach in den Bereich einer Heizung 7, bevor es über einen zweiten Temperatursensor 11 in die Flüssigkeitsabgabeöffnung 5 gelangt. Die Heizung 7 ist in Form eines massearmen Durchlauferhitzers mit Spulenwendeln ausgebildet. Das Wasser L wird mit Hilfe der Flüssigkeitspumpe 19 in Richtung $\overline{F}$ in die Heizung 7 gepumpt. Vor Erreichen der Heizung 7 durchläuft es den ersten Temperatursensor 9, der seine Ausgangstemperatur misst. Nach dem Erhitzungsvorgang in der Heizung 7 wird die Wassertemperatur ein zweites Mal am zweiten Temperatursensor 11 gemessen. Eine Regelungseinrichtung 13 empfängt und verarbeitet Signale aus dem ersten Temperatursensor 9, der Heizung 7 und dem zweiten Temperatursensor 11. Sie gibt Signale weiter an die Flüssigkeitspumpe 19, das Durchflussventil 21 und die Heizung 7. Hierzu weist sie folgende Komponenten auf:

Eine Eingangsschnittstelle 27 für Eingangsdaten des ersten Temperatursensors 9, eine Eingangsschnittstelle 25 für Daten des zweiten Temperatursensors 11, eine Messschnittstelle 31, welche Signale aus der Heizung 7 entgegennimmt, und eine Leistungsermittlungseinheit 17. Des Weiteren weist sie eine Subtraktionseinheit 15 sowie eine Zentraleinheit 33, eine Temperaturregelungseinheit 23 und eine Steuerungsschnittstelle 29 auf.

Die Temperaturdaten aus dem ersten Temperatursensor 9 und dem zweiten Temperatursensor 11 werden über die Eingangsschnittstellen 25, 27 in die Regelungseinrichtung 13 eingespeist. Die Subtraktionseinheit 15 zieht vom Temperaturwert, der im zweiten Temperatursensor 11 gemessen wurde, den Temperaturwert, der im ersten Temperatursensor 9 gemessen wurde, ab und bildet eine Temperaturdifferenz $\Delta T$. Über die Messschnittstelle 31 gelangen Leistungsdaten der Heizung 7 in eine Leistungsermittlungseinheit 17. Sie ermittelt daraus, welche Heizleistung $\dot{Q}$ in das Wasser L eingetragen wird. In der Zentraleinheit 33 werden die An-

gaben zum Leistungseintrag $\dot{Q}$ und zur Temperaturdifferenz ΔT aus der Leistungsermittlungseinheit 17 und der Subtraktionseinheit 15 zusammengeführt. Daraus wird der Quotient aus der Leistung $\dot{Q}$ und der mit der flüssigkeitsspezifischen Materialkonstante c multiplizierten Temperaturdifferenz ΔT gebildet. Dieser Quotient basiert auf der Berechnungsformel $\dot{Q} = c \times \dot{m} \times \Delta T$ und repräsentiert den Durchfluss an Wasser L zwischen der Flüssigkeitszuführung 3 und der Flüssigkeitsabgabeöffnung 5.

Aus dem Durchfluss werden zur Durchflusssteuerung im Folgenden Steuerungssignale abgeleitet: Über die Steuerungsschnittstelle 29 werden Steuerbefehle an die Flüssigkeitspumpe 19 und/oder an das Durchflussventil 21 geleitet, die die Durchflussmenge, beispielsweise durch Verringerung bzw. Erhöhung der Pumpleistung oder durch Drosseln bzw. Öffnen des Durchflussventils 21 regeln. Über eine Temperaturregelungseinheit 23 wird optional der Leistungseintrag der Heizung 7 in Abhängigkeit vom Durchflusswert geregelt, der in der Zentraleinheit 33 ermittelt wird.

Gegenüber dem Stand der Technik - hier einer Kaffeemaschine mit Durchflussmesser und Messung der Endtemperatur - wird in der Erfindung lediglich der erste Temperatursensor 9 zusätzlich hinzugefügt, sowie der Durchflussmesser weggelassen und die Regelungseinrichtung 13 mit weiteren Untereinheiten versehen. Üblicherweise wiese eine herkömmliche Regelungseinrichtung nur eine Eingangsschnittstelle für einen Temperatursensor 11 sowie die Steuerungsschnittstelle 29 zur Steuerung der Flüssigkeitspumpe 19 bzw. des Durchflussventils 21 und die Temperaturregelungseinheit 23 auf. Da es sich jedoch bei der Regelungseinrichtung 13 üblicherweise um eine programmbasierte, aus Chipbausteinen aufgebaute Einrichtung handelt, ist die erfindungsgemäße Funktionserweiterung der Regelungseinrichtung 13 ohne nennenswerten Aufwand zu bewerkstelligen.

Die hier dargestellte Anordnung von Komponenten wird integriert in eine Kaffeemaschine, in der sie üblicherweise zum Erhitzen bzw. Messen und Regeln des Flüssigkeitsstroms von Wasser verwendet wird. Die Flüssigkeitsabgabeöffnung 5 kann daher in eine Brühkammer einer Kaffeemaschine münden.

Da es sich bei der detailliert beschriebenen Zeichnung um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Heizung in anderer Form als in der hier beschriebenen folgen. Weiterhin schließt die Verwendung der unbestimmten Artikel "ein" bzw. "eine" nicht aus, dass die betreffenden Merkmale auch mehrfach vorhanden sein können.

Bezugszeichenliste

| 1 | Anordnung |
|---|---|
| 2 | Wasservorrat |
| 3 | Zuführung |
| 5 | Abgabeöffnung |
| 7 | Heizung |
| 9 | Temperatursensor |
| 11 | Temperatursensor |
| 13 | Regelungseinrichtung |
| 15 | Subtraktionseinheit |
| 17 | Leistungsermittlungseinheit |
| 19 | Flüssigkeitspumpe |
| 21 | Durchflussventil |
| 23 | Temperaturregelungseinheit |
| 25 | Eingangsschnittstelle |
| 27 | Eingangsschnittstelle |
| 29 | Steuerungsschnittstelle |
| 31 | Messschnittstelle |
| 33 | Zentraleinheit |
| c | Materialkonstante |
| $\overline{F}$ | Flussrichtung |
| L | Wasser |
| $\dot{m}$ | Massenstrom |
| $\dot{Q}$ | Heizleistung |
| $\dot{V}$ | Volumenstrom |
| ρ | Dichte |

Patentansprüche

1. Verfahren zur Ermittlung des Durchflusses von Flüssigkeiten (L) in einer Kaffeemaschine, die eine Zuführung (3) und eine Abgabeöffnung (5) für die Flüssigkeit (L) und dazwischen eine Heizung (7) und zwei Temperatursensoren (9, 11) sowie eine mit den beiden Temperatursensoren (9, 11) verbundene Regelungseinrichtung (13) umfasst, mit folgenden Schritten:

- Durchführung einer ersten Temperaturmessung der Flüssigkeit (L) stromauf der Heizung (7),
- Durchführung einer zweiten Temperaturmessung stromab der Heizung (7),
- Ermittlung einer Temperaturdifferenz aus den in den Temperaturmessungen ermittelten Temperaturen,
**dadurch gekennzeichnet, dass**
die Ermittlung des Durchflusses durch eine Ermittlung der Heizleistung ($\dot{Q}$) und eine Berechnung eines den Durchfluss repräsentierenden Quotienten aus der Heizleistung ($\dot{Q}$) und der mit einer für die Flüssigkeit (L) spezifischen Materialkonstante multiplizierten Temperaturdifferenz durchflussmesserfrei erfolgt.

**2.** Verfahren gemäß Anspruch 1, **dadurch gekennzeichnet, dass** eine Flüssigkeitspumpe (19) und/oder ein Durchflussventil (21) in Abhängigkeit von dem ermittelten Durchfluss der Flüssigkeit (L) geregelt werden.

**3.** Kaffeemaschine mit einer Zuführung (3), einer Abgabeöffnung (5) für eine Flüssigkeit (L) und dazwischen einer Heizung (7) und zwei Temperatursensoren (9, 11) stromauf und stromab der Heizung (7) sowie einer mit den beiden Temperatursensoren (9, 11) verbundenen Regelungseinrichtung (13), **dadurch gekennzeichnet, dass** die Kaffeemaschine durchflussmesserfrei betreibbar ist, indem die Regelungseinrichtung (13) mit einer Leistungs-Ermittlungseinheit (17) zur Bestimmung einer Leistung der Heizung (7) gekoppelt ist und im Betrieb einen den Durchfluss repräsentierenden Quotienten aus der Heizleistung und der mit einer für die Flüssigkeit (L) spezifischen Materialkonstante multiplizierten Temperaturdifferenz bildet.

**4.** Kaffeemaschine gemäß Anspruch 3, **gekennzeichnet durch** eine Subtraktionseinheit (15) in der Regelungseinrichtung (13) zur Bestimmung der Temperaturdifferenz zwischen einer vom ersten Sensor (9) und vom zweiten Sensor (11) gemessenen Temperatur.

**5.** Kaffeemaschine gemäß Anspruch 3 oder 4, **dadurch gekennzeichnet, dass** die Regelungseinrichtung (13) mit einer Flüssigkeitspumpe (19) und/oder einem Durchflussventil (21) gekoppelt ist, die sie im Betrieb in Abhängigkeit von dem ermittelten Durchfluss regelt.

## Claims

**1.** Method of determining the throughflow of liquids (L) in a coffee machine, which comprises a feed (3) and a delivery opening (5) for the liquid (L) and therebetween a heater (7) and two temperature sensors (9, 11) as well as a regulating device (13) connected with the two temperature sensors (9, 11), comprising the following steps:

- carrying out a first temperature measurement of the liquid (L) upstream of the heater,
- carrying out a second temperature measurement downstream of the heater (7) and
- determining a temperature difference from the temperatures determined in the temperature measurements,

**characterised in that** the determination of the throughflow is carried out free of throughflow meter by a determination of the heat output ($\tau$) and a calculation of a quotient, which represents the throughflow, from the heat output ($\tau$) and the temperature difference multiplied by a material constant specific to the liquid (L).

**2.** Method according to claim 1, **characterised in that** a liquid pump (19) and/or a throughflow valve (21) is or are regulated in dependence on the determined throughflow of the liquid (L).

**3.** Coffee machine with a feed (3), a delivery opening (5) for a liquid (L) and therebetween a heater (7) and two temperature sensors (9, 11) upstream and downstream of the heater (7) as well as a regulating device (13) connected with the two temperature sensors (9, 11), **characterised in that** the coffee machine is operable free of a throughflow meter **in that** the regulating device (13) is coupled with an output determining unit (17) for determining an output of the heater (7) and in operation forms a quotient, which represents the throughflow, from the heat output and the temperature difference multiplied by a material constant specific to the liquid (L).

**4.** Coffee machine according to claim 3, **characterised by** a subtraction unit (15) in the regulating device (13) for determining the temperature difference between a temperature measured by the first sensor (9) and a temperature measured by the second sensor.

**5.** Coffee machine according to claim 3 or 4, **characterised in that** regulating device (13) is coupled with a liquid pump (19) and/or a with a throughflow valve (21), which the device regulates in operation in dependence on the determined throughflow.

## Revendications

**1.** Procédé pour déterminer le débit de liquides (L) dans une machine à café, laquelle comprend une arrivée (3) et une ouverture de distribution (5) pour le liquide (L) et entre les deux un chauffage (7) et deux capteurs de température (9, 11) ainsi qu'un dispositif de régulation (13) relié aux deux capteurs de température (9, 11), comprenant les étapes suivantes :

- mise en oeuvre d'une première mesure de température du liquide (L) en amont du chauffage (7),
- mise en oeuvre d'une seconde mesure de température en aval du chauffage (7),
- détermination d'une différence de température à partir des températures déterminées dans les mesures de température,
**caractérisé en ce que**
la détermination du débit s'effectue sans débitmètre par une détermination de la puissance de

chauffage ($\dot{Q}$) et par un calcul d'un quotient représentant le débit résultant de la puissance de

chauffage ($\dot{Q}$) et de la différence de température multipliée par une constante de matériau
spécifique pour le liquide (L).

2. Procédé selon la revendication 1, **caractérisé en ce qu'**une pompe à liquide (19) et/ou une vanne d'écoulement (21) sont régulées en fonction du débit calculé du liquide (L).

3. Machine à café comprenant une arrivée (3), une ouverture de distribution (5) pour un liquide (L) et entre les deux un chauffage (7) et deux capteurs de température (9, 11) en amont et en aval du chauffage (7) et un dispositif de régulation (13) relié aux deux capteurs de température (9, 11),
**caractérisée en ce que**
la machine à café peut être utilisée sans débitmètre du fait que le dispositif de régulation (13) est couplé avec une unité de détermination de puissance (17) pour déterminer une puissance du chauffage (7) et forme pendant le fonctionnement un quotient représentant le débit résultant de la puissance de chauffage et de la différence de température multipliée par une constante de matériau spécifique pour le liquide (L).

4. Machine à café selon la revendication 3, **caractérisée par** une unité de soustraction (15) dans le dispositif de régulation (13) pour la détermination de la différence de température entre une température mesurée par le premier capteur (9) et une température mesurée par le second capteur (11).

5. Machine à café selon la revendication 3 ou 4, **caractérisée en ce que** le dispositif de régulation (13) est couplé avec une pompe à liquide (19) et/ou une vanne d'écoulement (21), lequel dispositif régule la machine pendant le service en fonction du débit déterminé.

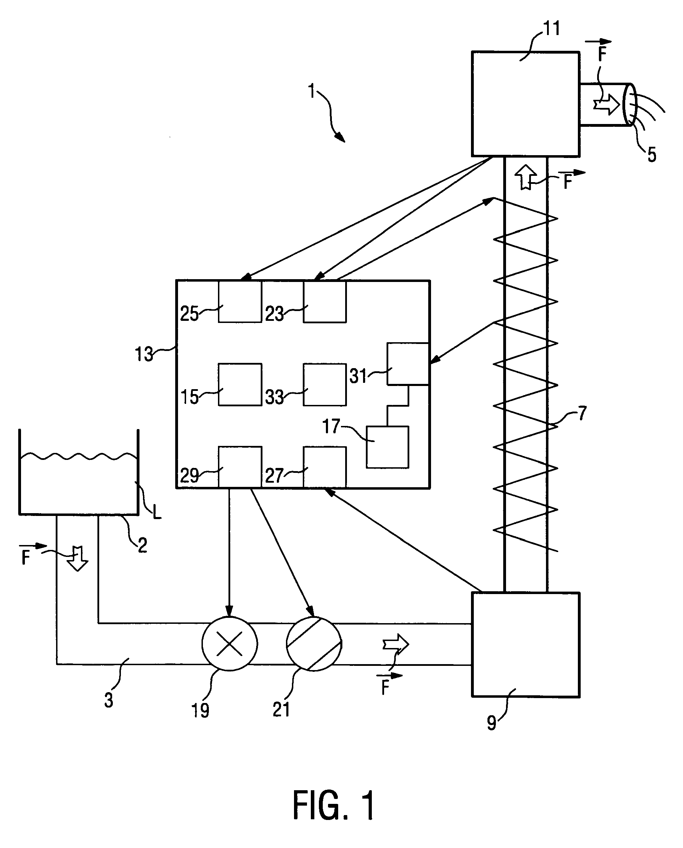

# FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0771542 A1